# FASCICULE DE BREVET EUROPEEN

(11) **EP 0 994 082 B1**
(45) Date de publication et mention de la délivrance du brevet: **02.05.2003**
(21) Numéro de dépôt: 99402533.6
(22) Date de dépôt: 14.10.1999
(51) Int. Cl.: C04B 28/02, C04B 18/10

(54) **Procédé de traitement et d'utilisation d'un mâchefer résultant de l'incinération d'ordures ménagères**
Verfahren zur Behandlung und Verwendung von Schlacken aus der Hausmüllverbrennung
Process for treating and using household waste incineration slag

(30) Priorité: 16.10.1998 FR 9812982
(43) Date de publication de la demande: 19.04.2000
(73) Titulaire: Yprema, 94437 Chennevieres sur Marne (FR)
(72) Inventeur: Basuyau, Vincent Cabinet Christian Schmit&Associés, 9500 Cergy (FR)
(74) Mandataire: Schmit, Christian Norbert Marie

(56) Documents cités:
- FR-A- 2 689 120
- US-A- 5 416 252
- US-A- 5 466 407

## Description

La présente invention a pour objet un procédé de traitement et d'utilisation d'un mâchefer résultant de l'incinération d'ordures ménagères. Elle vise à augmenter le volume des mâchefers réellement valorisés en améliorant les traitements préalables qu'ils subissent avant mise en oeuvre. Elle vise essentiellement à réduire des problèmes de gonflement que rencontrent les mâchefers utilisés, une fois mis en place, et qui amènent à des désordres dans les structures ou les édifices auxquels ils contribuent.

Le traitement des ordures ménagères, notamment dans les pays occidentaux, est massivement résolu par une incinération. Cette incinération, tout en réduisant le volume des ordures, provoque une production importante de résidus d'incinération d'ordures ménagères, appelés mâchefers dans la suite de cet exposé pour simplifier. Ces mâchefers présentent certaines caractéristiques physico-chimiques liées à leur provenance et au traitement d'incinération qu'ils ont subi. Leur provenance est essentiellement domestique et conduit à des résidus de matières organiques et à des matières utilisées pour fabriquer tous les ustensiles de la vie courante.

Le traitement d'incinération consiste à faire passer les ordures sur une sole, une grille, inclinée avec une épaisseur suffisante pour qu'un phénomène d'autocombustion se produise. De l'air est insufflé par le dessous de la grille pour entretenir la combustion. Les défauts d'homogénéité des ordures traitées et des soucis d'efficacité de l'incinération ont pour conséquence que le traitement d'incinération est arrêté au bout de la sole : les résidus brûlants sont alors éteints par déversement dans un bac rempli avec de l'eau. Il en résulte deux conséquences. D'une part une quantité plus ou moins importante de matières organiques non brûlées subsiste dans le mâchefer, et d'autre part celui-ci est gorgé d'eau. Par ailleurs, le mâchefer obtenu présente un caractère polluant dû aux métaux lourds plomb, mercure, cadmium ayant servi pour la fabrication des objets mis au rebut.

Dans l'état de la technique, notamment dans l'enseignement du brevet européen EP-A-0 380 713, il a été imaginé d'effectuer un traitement de ces mâchefers en les mélangeant avec un liant hydraulique, un ciment portland, et en compactant le mélange obtenu fortement, notamment pour fabriquer des briques. Il est connu qu'en agissant ainsi des problèmes de plasticité due à la présence de matières organiques, et à l'excès d'eau, sont efficacement combattus. En outre, la présence du ciment apporte d'une manière attendue une limitation des relargages des métaux lourds. Tout se passe comme si les particules de métaux lourds étaient emprisonnées dans des gangues solidifiées par la prise du mâchefer avec des liants hydrauliques. En conséquence, lors de l'utilisation de ces mâchefers à l'extérieur et lors de leur soumission aux intempéries (pluie, soleil, gel), ces particules toxiques piégées ne vont pas polluer les nappes phréatiques.

Le fait de traiter le mâchefer avec des liants hydrauliques a pour effet de leur maintenir un Ph élevé, de l'ordre de 10 ou 11 dans le milieu après la mise en oeuvre. C'est aussi ce Ph qui contribue à annuler les relargages éventuels en métaux lourds.

Néanmoins des problèmes subsistent. Dans le brevet français FR-A-2 689 120 on indique par ailleurs que les ciments portland, contenant de l'aluminate tricalcique, peuvent donner lieu à des phénomènes de gonflement soit en présence de gypse contenu dans le ciment soit en présence d'eau sulfatée provenant du mâchefer. Ces phénomènes de gonflement bien connus sont essentiellement des phénomènes d'éttringite. Pour remédier à ce problème, ce demier document évoque l'utilisation des liants hydrauliques sans clinker, notamment des liants dans lesquels le clinker est remplacé par du laitier. Ceci amène à proposer des formulations de ciment tout laitier, ou avec au moins 75 à 80 % de laitier.

Dans la pratique, du fait de la dispersion de caractéristiques de portance et de dureté des structures obtenues après la prise hydraulique des mâchefers, on ne distingue comme utilisation significative que des utilisations routières. Dans ces utilisations les mâchefers peuvent être utilisés d'une part comme remblai et d'autre part dans les corps de chaussée eux-mêmes. Mais dans ce cas, de préférence, ils interviennent plutôt dans les couches de fondation que dans les couches de base (proches de la couche de roulement). Dans ce cas, l'utilisation du ciment au laitier est particulièrement indiquée vu son faible coût.

Dans l'invention, on s'est préoccupé des phénomènes de gonflement. On s'est rendu compte que parmi les solutions proposées, même les solutions dans lesquelles les mâchefers étaient mélangés et liés avec des liants hydrauliques au laitier, des problèmes de gonflement continuaient à se produire. Tout simplement ils se produisent au bout d'une durée longue supérieure à 150 jours. Dans certains cas, ce gonflement pouvait atteindre de 5 à 10 % du volume mis en place. De tels gonflements peuvent avoir des conséquences catastrophiques si un ouvrage de génie civil est assis sur des fondations réalisées avec de tels matériaux. Notamment on a constaté que l'ajout de 3 ou 6 % de ciment au laitier ne faisait que retarder le gonflement et que, statistiquement, l'enseignement du brevet cité ci-dessus ne correspondait pas à la réalité.

Dans l'invention on a pu remédier à ce problème. On s'est rendu compte, au contraire, que l'ajout de certaines quantités de ciment portland artificiel (CPA) non seulement retardait également le gonflement, à peu près dans les mêmes proportions que dans les ciments au laitier, mais avait pour conséquence essentielle que le gonflement résultant était considérablement réduit. Dans les deux cas, avec du ciment au laitier ou avec du ciment au clinker (ciment CPA) le gonflement est dû à la formation de gel polyhydraté d'hydroxyde d'aluminium (monosulfoaluminate de calcium).

Ce gonflement, démarré pendant ou après le mûrissement du mâchefer est également couramment constaté sur des éprouvettes de mâchefers mûris, traités ou non traités par un liant hydraulique. On sait notamment que les pressions de gonflement pouvant atteindre 10 MégaPascals, MPa, sont rencontrées. Un tel gonflement ne se produit logiquement qu'en présence d'air, donc dans des milieux insaturés. En ce qui conceme la rapidité, on a constaté notamment que les éprouvettes maintenues dans l'eau gonflent 10 fois moins vite.

Dans l'invention pour résoudre ces problèmes on a, contrairement à l'enseignement de l'état de la technique utilisé un ciment CPA, notamment le ciment CEM I 42,5 PM ES CP2 de la société Ciment Calcia du groupe italien Ital Cementi Group. Bien que ce ciment ne soit présenté par ce fabricant comme non adapté pour les travaux routiers, on s'est rendu compte que ce ciment avait des performances particulièrement intéressantes pour le traitement des mâchefers en vue de leur utilisation en technique routière et justement dans le but de limiter les gonflements. Selon l'invention, ce résultat est obtenu parce qu'un tel ciment CPA présente des caractéristiques de résistance et de prise bien supérieures à un ciment au laitier et est de nature à former des pièges rigides pour emprisonner des amorces de gonflement éttringitiques. Ce ciment possède par ailleurs une proportion d'aluminium tricalcique (C3A, célite) faible qui favorise grandement la réduction des gonflements.

L'invention a donc pour objet un procédé de traitement et d'utilisation d'un mâchefer d'incinération d'ordures ménagères, dans lequel
- on fait maturer ce mâchefer pendant une période de maturation,
- on mélange ce mâchefer avec un ciment,
- on met en oeuvre le mélange obtenu pour l'utilisation,
caractérisé en ce que
- comme ciment, on choisit un ciment avec environ 95% de clinker et avec une teneur en aluminium tricalcique inférieure à 10% en poids.

Normalement, dans l'utilisation routière, il s'écoule un certain temps entre le début du malaxage du matériau à mettre en oeuvre et la fin de son compactage une fois mis en place. Ce temps peut être long. Dans le cas de travaux de renforcement sous la circulation ou de renforcement coordonné, ce temps peut être de 5 à 20 heures. On demande donc en général aux graves ciment un certain degré de maniabilité (au-delà duquel un compactage tardif ferait baisser les résistances). Les ciments utilisés doivent donc avoir un temps de prise allongé, être peu nerveux au départ, et posséder une courbe de résistance adaptée. D'une manière habituelle les cimentiers proposent donc différentes formules de ciments spéciaux pour ces travaux routiers : ils proposent essentiellement des ciments à forte teneur en laitier, ou en cendres volantes, associé au fait que le ciment est faiblement humidifié au malaxage. Dans ces conditions la mise en oeuvre en technique routière peut se faire dans de bonnes conditions.

La solution de l'invention consistant à utiliser un ciment de type CPA, plutôt nerveux et ayant les qualités de résistances indiquées ci-dessus pour limiter les phénomènes de gonflement, est alors utilement améliorée en lui associant un retardateur de prise. Dans un exemple le retardateur de prise sera du gypse ou de plâtre : un sulfate de calcium anhydrite ou un sulfate de calcium hydraté.

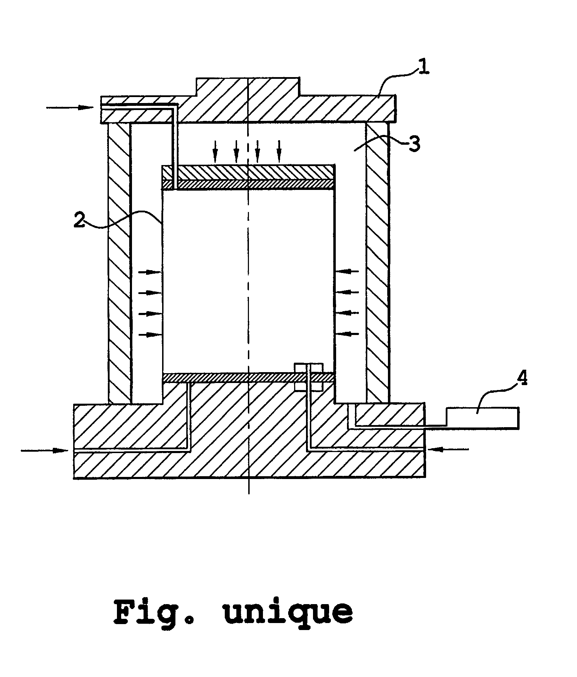

L'invention sera mieux comprise à la lecture de la description qui suit et à l'examen de la figure qui l'accompagne. Celles-ci ne sont présentées qu'à titre indicatif et nullement limitatif de l'invention. La figure 1 montre une cellule tri-axiale utilisée pour mesurer des effets de gonflement.

Un exemple de procédé de traitement de mâchefers selon l'invention, notamment, en vue de leurs utilisations en technique routière, est détaillé ci-après.

D'une manière connue le mâchefer produit sera étendu, après extraction de son bac de décantation, à l'air libre pour conduire une phase de maturation. Cette phase de maturation peut durer de l'ordre de 1 à 3 mois, de préférence elle est supérieure ou égale à 2 mois. Pendant cette période de maturation, des phénomènes de lessivage des métaux lourds se produiront naturellement. Aussi, l'aire de maturation devra de préférence être une aire étanche, reliée par un système de canalisations et de drainage à un décanteur étanche également. L'eau de ce décanteur pourra par ailleurs être utilisé pour asperger périodiquement la masse de mâchefer en maturation et y favoriser les transformations.

En préalable à cette phase de maturation, ou au cours de celle-ci, le mâchefer à préparer subit un traitement de déferraillage. D'une manière connue, ce déferraillage est réalisé de manière magnétique. On déplace une bande transporteuse munie de plaques de fer entre un aimant à courant continu et une mince couche de mâchefer criblé. Les parties en fer de la couche de mâchefer sont attirées par l'aimant. Les plaques de la bande passent ensuite sur une raclette où dans un dispositif de centrifugation qui projette les résidus en fer dans un bac de récupération.

Dans l'invention, compte tenu de l'importance de l'aluminium dans les phénomènes de gonflement, on fera subir au mâchefer un traitement spécifique d'enlèvement des métaux non ferreux. De préférence cet enlèvement des métaux non ferreux est réalisé au début du cycle de maturation. Pour cet enlèvement, on peut envisager en complément un traitement manuel. En effet, les résidus en aluminium du traitement des ordures ménagères sont des ustensiles de cuisine dont la forme peut être identifiée et conduire à leur évacuation. De préférence cependant, notamment si un criblage d'évacuation des grosses pièces a déjà été entrepris, on utilisera un magnétiseur à courants de Foucault. Dans son principe un tel magnétiseur induit un champ magnétique alternatif qui fait naître des courants de Foucault dans les déchets contenus dans le mâchefer. Ces courants de Foucault donnent eux-mêmes naissance à un champ magnétique induit qui, pour s'opposer au champ magnétique inducteur, provoquera le déplacement physique des parties métalliques où il se développe et qui sont à éliminer. Dans un exemple le magnétiseur à courant de Foucault utilisé est un SMA60 de la société ANDRIN à Villers la Montagne, France. De ce fait au cours de cette phase de préparation comportant la maturation, dans l'invention on aura essentiellement cherché à réduire le plus possible la présence de déchets d'aluminium dans le mâchefer.

Au cours d'une étape suivante, après cette maturation, on mélangera le mâchefer avec un ciment. Cette étape de mélange se situera dans une plage horaire limitée par rapport à la fin de l'utilisation. Par exemple le mélange sera effectué au plus tôt cinq heures avant la fin de l'utilisation. Le mélange comportera une proportion très importante de clinker. Dans un exemple cette proportion est de l'ordre de 95 %, c'est-à-dire entre 90 % et 100 %. Dans un exemple le ciment portland artificiel utilisé est le ciment CEM I cité ci-dessus dont la composition est la suivante

**TABLEAU 1**

| NATURE | | CARACTERISTIQUES | |
|---|---|---|---|
| éléments simples | | composants minéraux | |
| Clinker (K) | 100% | CaO/SiO2 | 2,96% |
| SiO2 | 21,40% | MgO | 2,10% |
| Al2O3 | 3,60% | Al2O3 | 3,50% |
| Fe2O3 | 4,20% | S | 0,00% |
| TiO2 | 0,30% | Insoluble | 0,10% |
| MnO | 0,05% | C3S (alite) | 62,70% |
| CaO | 63,65% | C2S (bélite) | 15,40% |
| MgO | 2,15% | C3A (célite) | 2,00% |
| SO3 | 2,70% | C4AF (célite) | 13,1% |
| K2O | 0,55% | | |
| Na2O | 0,13% | | |
| P2O5 | 0,18% | | |
| S-- | <0,01% | | |
| Cl- | 0,02% | | |
| Insoluble CEN | 0,15% | | |
| CO2 | 0,20% | | |
| CaO libre | 0,65% | | |
| Na2O actif | 0,49% | | |

Ce ciment présente la caractéristique importante que les aluminates tricalciques C3A (célite) y sont en faible proportion. Cette proportion doit être inférieure à 10 %. De préférence elle doit être inférieure à 5 %. Au mieux, comme dans l'essai réalisé, elle est de 2 % ou inférieure. Selon la susceptibilité du mâchefer au gonflement on utilisera l'une ou l'autre de ces catégories de ciment CPA : le taux de célite C3A devant être choisi plus faible si le mâchefer est plus susceptible de se gonfler. Autrement qu'avec ce ciment, il a été fait des essais comportant les caractéristiques suivantes de nature de liant et de teneur de liant dans le mélange :

| **Nature du liant** | **Teneur** |
|---|---|
| Laitier moulu 80 % +clinker 15 % + chaux 5 % | 3 % et 5 % |
| Laitier 60 % + chaux 40 % | 5 % |
| Laitier moulu | 3 % et 6 % |
| Ciment CPA (celui du tableau ci-dessus) | 3 % et 6 % |
| Ciment CPA autres | 4 % à 10 % |

Il a également été essayé des mélanges de ciment et de polymères, des mélanges de clinker et de silicates solubles, des ciments pouzzolanes et des phosphates solubles.

Selon l'invention, les seuls liants hydrauliques qui donnent des résultats satisfaisants du point de vue des gonflements sont les ciments CPA, en particulier le ciment CPA détaillé plus haut. On a découvert ainsi que le ciment CPA, du fait qu'il conduisait à des résistances plus grandes était bien mieux à même de réduire les gonflements. En combinant alors les caractéristiques mécaniques de ce ciment à un choix dans cette catégorie de ciment d'un ciment sans composant minéral C3A et à un enlèvement spécifique des déchets en aluminium, on obtenait un produit final, un mâchefer faisant une prise, présentant une réduction très importante des risques de gonflement et présentant donc des gonflements résultants bien moins importants. Si aucune des contraintes supplémentaires n'est satisfaite, les gonflements sont quand même statistiquement 50 % inférieurs à ceux des liants connus. Si les autres contraintes, absence de célite et enlèvement des déchets d'aluminium, sont satisfaites, les gonflements peuvent être réduits de 95 %.

Pour atteindre le minimum requis par les spécifications de solidité demandées aux graves traitées au liant hydraulique dans le domaine de l'industrie routière, une teneur minimale de 7 % en liant est requise. Les résultats exploitables suivants ont été obtenus avec 8 % de CPA de type CEM I dans le cas d'un mâchefer.

| | | |
|---|---|---|
| Optimum Proctor modifié : teneur en eau soluble | | 18,5 % |
| teneur en eau mesurée après l'essai | | 12,3 % |
| densité sèche | | 1,8 g/cm³ |
| Résistance à la compression simple à 28 jours | RC28 | 9 à 10 MPa |
| Résistance à la compression diamétrale à 28 jours | RTB 28 | 1 à 1,2 MPa |
| Résistance en flexion à 28 jours | RTF 28 | 1,7 MPa |
| Module en flexion à 28 jours | EF 28 | 10 000 MPa |
| Gonflement au gel/dégel après 30 cycles | | < 1 % |
| Perméabilité à l'OPM | | 10⁻⁹ m/s |

Pour caractériser la quantité de ciment à mettre en oeuvre dans un mâchefer donné, pour une production donnée, on se livre préalablement selon l'invention à des expériences de gonflement, avec une quantité connue de liant hydraulique, ou éventuellement même sans liant hydraulique. La cinétique de gonflement semble suivre trois phases distinctes. Au cours d'une première phase qui dure une vingtaine de jours, on assiste à un fort gonflement des éprouvettes. On peut par exemple obtenir selon les mâchefers un gonflement de 30 % du maximum. Au cours d'une deuxième phase, la vitesse de gonflement est plus lente. On peut obtenir un gonflement de 65% du maximum en 100 jours dans certains cas au cours de cette deuxième phase. Au cours d'une troisième phase, finale, on observe assez nettement la stabilisation de l'éprouvette. Dans le cadre des essais l'augmentation finale de volume observée est de 5 % du maximum pendant cette dernière phase.

Pour mesurer le gonflement on a utilisé une cellule tri-axiale représentée sur la figure 1. Dans cette cellule, le matériau dont on cherche à mesurer la pression a en fait été maintenu confiné, à volume constant, de manière à ce que la mesure de gonflement soit transformée en une mesure de pression, beaucoup plus facilement accessible. Dans ce but, la cellule comporte une structure rigide et fermée 1 à l'intérieur de laquelle le matériau à mesurer est contenu dans une enveloppe imperméable et déformable 2. La liaison entre l'enveloppe 2 et la structure rigide 1 est réalisée par une gaine d'eau 3 dont on mesure la pression dans un capteur de pression 4. De préférence l'eau de la gaine 3 est de l'eau déminéralisée et désaérée. Dans un exemple, l'enveloppe 2 comporte une gaine dite VITON.

Pour une meilleure reproductivité des essais, on a cherché pour une durée de prise à faire disparaître les facteurs limitant de la réaction de gonflement. Ces facteurs sont notamment l'absence d'aération, l'absence d'air. Comme indiqué ci-dessus, quand le mâchefer est noyé (il n'y a pas d'air), les gonflements sont moins importants. Donc dans l'invention, à l'intérieur de l'enveloppe 2, le mâchefer à étudier a été soumis à une circulation d'air et aussi de préférence à une circulation d'eau de manière à reproduire les conditions qu'il aurait s'il était à l'air libre.

En fonction de cette mesure on est alors capable de déterminer pour une production donnée de mâchefer (par exemple une moyenne sur des lots produits pendant un mois) l'aptitude au gonflement. En fonction de cette mesure, on dose la quantité de liant hydraulique à mettre en oeuvre. Typiquement ce dosage peut amener à passer de 3 % à 10 % afin de garantir une stabilité mécanique après prise. Il est possible toutefois que, du fait d'une propension à une expansion trop importante, il devienne impossible de contenir les gonflements. Dans ce cas, plutôt que de destiner les mâchefers ainsi traités à l'utilisation routière, on pourra les destiner à une utilisation en remblais. Cela pourra également être le cas si, pour des raisons de coût, on ne souhaite pas augmenter exagérément la quantité de liant hydraulique. En outre si aucune de ces utilisations n'est possible, le mâchefer produit devra être réservé à une utilisation en remblai, comblement de carrière ou d'excavation, ou en décharge de classe 3. En outre, pour une utilisation projetée, la quantité de ciment est également ajustée en fonction de cette mesure d'expansion. Par exemple pour les terrassements, c'est à dire les travaux qui correspondent aux couches de forme et aux remblais en technique routière, le dosage de ciment sera de préférence de l'ordre de 1% à 4%. Il sera de préférence de 3% à 8% pour les assises de chaussée, c'est à dire les couches de fondation et couches de base.

Dans un exemple, on a déterminé pour un mâchefer d'incinération d'ordures ménagères, ayant la caractéristique d'avoir une teneur en eau d'environ 15,5% par rapport à la matière sèche totale, la nature et la proportion de liant hydraulique à utiliser. Dans cet exemple, on a déterminé qu'un ciment CPA de type CEM I est préférable à un ciment au laitier au regard de résultats obtenus suite à des études de résistances et des études de gonflement. Notamment, dans cet exemple, on a démontré qu'une composition de mélange comportant au moins 3 % de ciment de type CEM I permettait d'obtenir une résistance, au bout de 7 jours, supérieure à un critère inférieur d'acceptation de 1 MPa. Par ailleurs, le mélange mâchefer et ciment de type CEM I a présenté, contre toute attente, un gonflement moins important que le mélange avec le ciment au laitier. Conformément à l'invention, le mélange mâchefer et ciment de type CEM I assure une cohésion qui vient bien compenser le gonflement inhérent à ce type de mélange. De cet exemple, on peut déduire que plus la proportion de ciment dans le mélange est importante, moins le gonflement du mélange est important.

En conclusion, en fonction de l'étude de gonflement, soit on détermine la quantité de liant à utiliser, soit on détermine le type d'utilisation qui convient pour le mâchefer dont on dispose.

Comme retardateur de prise, on utilisera de préférence le sulfate de calcium anhydrite, ou même le sulfate de calcium hydraté dans une proportion de 0,5% à 5% en poids du ciment. Ce retardateur présente l'avantage d'être facilement disponible, à faible coût, et contrairement à l'enseignement cité de ne pas provoquer dans les mâchefers liés aux ciments CPA de gonflements spécifiques.

## Revendications

1. Procédé de traitement d'un mâchefer d'incinération d'ordures ménagères, dans lequel
- on fait maturer ce mâchefer pendant une période de maturation,
- on mélange ce mâchefer avec un ciment,
- on met en oeuvre le mélange obtenu pour l'utilisation,
**caractérisé en ce que**
- comme ciment, on choisit un ciment avec environ 95% de clinker, ce ciment comportant de l'aluminium tricalcique tel qu'une teneur en aluminium tricalcique est inférieure à 5% en poids.

2. Procédé selon la revendication 1, **caractérisé en ce que**
- on choisit un ciment avec environ 95% de clinker et avec une teneur en aluminium tricalcique inférieure à 2% en poids.

3. Procédé selon l'une des revendications 1 à 2, **caractérisé en ce que**
- comme ciment, on choisit un ciment avec environ 95% de clinker et avec un retardateur de prise.

4. Procédé selon l'une des revendications 1 à 3, **caractérisé en ce que**
- on choisit un sulfate de calcium anhydrite ou un sulfate de calcium hydraté, dans une proportion de 0,5% à 5% en poids du ciment comme retardateur de prise.

5. Procédé selon l'une des revendications 1à 4, **caractérisé en ce que**
- on mesure, pour une production de mâchefer donnée, une expansion d'une éprouvette de mâchefer au bout d'un certain temps, et
- on détermine la quantité de ciment à inclure dans le mélange pour cette production en fonction de cette mesure d'expansion et en fonction de l'utilisation projetée du mâchefer.

6. Procédé selon l'une des revendications 1à 5, **caractérisé en ce que**
- on mesure, pour une production de mâchefer donnée, une expansion d'une éprouvette de mâchefer au bout d'un certain temps, et
- on réserve le mâchefer de cette production à une classe d'utilisation en fonction de cette mesure d'expansion.

7. Procédé selon l'une des revendications 5 ou 6, **caractérisé en ce que**
- on mesure l'expansion, à volume constant, par une mesure de variation de pression.

8. Procédé selon l'une des revendications 5 à 7, **caractérisé en ce que**
- on mesure l'expansion en soumettant le mâchefer de l'éprouvette à une aération et ou à une humidification.

9. Procédé selon l'une des revendications 1 à 8, **caractérisé en ce que** pour le traitement du mâchefer on en élimine les métaux non ferreux, notamment l'aluminium, notamment par un magnétiseur à courants de Foucault.

## Claims

1. A method for treating slag resulting from incineration of household waste, in which
- the slag is seasoned for a seasoning period,
- this slag is mixed with a cement,
- the mixture obtained thereby is used in subsequent processes,
**characterised in that**
- the cement selected is a cement containing about 95 % clinker, which cement includes tricalcium aluminium and a tricalcium aluminium content is less than 5 % by weight.

2. The method according to claim 1, **characterised in that**
- the cement selected is a cement containing about 95 % clinker, and including tricalcium aluminium in a quantity less than 2 % by weight.

3. The method according to either of claims 1 or 2, **characterised in that**
- the cement selected is a cement containing about 95 % clinker and containing a retarding agent.

4. The method according to any of claims 1 to 3,
**characterised in that**
- an anhydrous calcium sulphate or a hydrated calcium sulphate in a ratio from 0.5 % to 5 % by weight of the cement is chosen as the retarding agent.

5. The method according to any of claims 1 to 4,
**characterised in that**
- for a given production of slag, an expansion of a sample of the slag is measured after the elapse of a certain time,
- the quantity of cement to be included in the mixture for this production is determined on the basis of this expansion measurement and with reference to the intended use for the slag.

6. The method according to any of claims 1 to 5,
**characterised in that**
- for a given production of slag, an expansion of a sample of the slag is measured after the elapse of a certain time,
- the slag from this production is reserved for a class of application on the basis of this expansion measurement.

7. The method according to either of claims 5 or 6, **characterised in that**
- the expansion is measured for a constant volume using a pressure variation measurement.

8. The method according to any of claims 5 to 7,
**characterised in that**
- the expansion is measured by subjecting the slag in the sample to aeration or tempering.

9. The method according to any of claims 1 to 8,
**characterised in that**
- for the treatment of the slag, its non-ferrous metal content, particularly aluminium, is eliminated, particularly using an eddy current magnetizer.

## Patentansprüche

1. Verfahren zur Verarbeitung von Hausmüllverbrennungsschlacke, bei dem
- man die Schlacke während einer Reifezeit reifen lässt,
- man die Schlacke mit einem Zement mischt,
- man das erzielte Gemisch zum Gebrauch anwendet,
**dadurch gekennzeichnet, dass**
- man als Zement einen Zement mit etwa 95 % Klinker verwendet, dass der Zement Tricalciumaluminium umfasst, wobei der Gehalt an Tricalciumaluminium geringer ist als 5 Gew. %.

2. Verfahren nach Anspruch 1, **dadurch gekennzeichnet, dass**
- man einen Zement mit etwa 95 % Klinker und einem Gehalt an Tricalciumaluminium von weniger als 2 Gew. % verwendet.

3. Verfahren nach einem der Ansprüche 1 und 2, **dadurch gekennzeichnet, dass**
- man als Zement einen Zement mit etwa 95 % Klinker und mit einem Abbindeverzögerer auswählt.

4. Verfahren nach einem der Ansprüche 1 bis 3, **dadurch gekennzeichnet, dass**
- man ein Calciumsulfatanhydrid auswählt oder ein Calciumsulfathydrid mit einem Anteil von 0,5 Gew. % bis 5 Gew. % des Zementgewichts als Abbindeverzögerer auswählt.

5. Verfahren nach einem der Ansprüche 1 bis 4, **dadurch gekennzeichnet, dass**
- man für eine bestimmte Schlackeproduktion eine Dehnung einer Schlackenprobe nach einer bestimmten Zeit misst, und dass
- man die Menge Zement bestimmt, die für diese Produktion in Abhängigkeit von der Dehnungsmessung und in Abhängigkeit vom geplanten Gebrauch der Schlacke in das Gemisch gegeben werden muss.

6. Verfahren nach einem der Ansprüche 1 bis 5, **dadurch gekennzeichnet, dass**
- man für eine bestimmte Schlackeproduktion eine Dehnung einer Schlackeprobe nach einer bestimmten Zeit misst, und dass
- man die Schlacke dieser Produktion einer Gebrauchskategorie in Abhängigkeit von dieser Dehnungsmessung vorbehält.

7. Verfahren nach einem der Ansprüche 5 oder 6, **dadurch gekennzeichnet, dass**
- man die Dehnung bei konstantem Volumen durch eine Druckänderungsmessung bestimmt.

8. Verfahren nach einem der Ansprüche 5 bis 7, **dadurch gekennzeichnet, dass**
- man die Dehnung misst, indem man die Schlacke der Probe einer Belüftung oder Befeuchtung unterzieht.

9. Verfahren nach einem der Ansprüche 1 bis 8, **dadurch gekennzeichnet, dass** man zur Behandlung der Schlacke nicht eisenhaltige Metalle eliminiert, insbesondere durch einen Magnetisierer mit Foucault'schen Strömen.
